# EUROPÄISCHE PATENTSCHRIFT

(11) **EP 2 526 849 B1**
(45) Veröffentlichungstag und Bekanntmachung des Hinweises auf die Patenterteilung: **12.11.2014**
(21) Anmeldenummer: 12401101.6
(22) Anmeldetag: 16.05.2012
(51) Int. Cl.: A47L 15/42, D06F 39/00

(54) **Verfahren zum Betrieb eines programmgesteuerten Haushaltgeräts**
Method for operating a programmed domestic appliance
Procédé destiné au fonctionnement d'un appareil ménager programmé

(30) Priorität: 23.05.2011 DE 102011050562
(43) Veröffentlichungstag der Anmeldung: 28.11.2012
(73) Patentinhaber: Miele & Cie. KG, 33332 Gütersloh (DE)
(72) Erfinder: Reilmann, Michael, 33611 Bielefeld (DE); Schütte, Thorsten, 33102 Paderborn (DE); Sgurski, Eugen, 33649 Bielefeld (DE)

(56) Entgegenhaltungen:
- EP-A2- 0 800 785
- WO-A1-2005/051157
- DE-A1- 19 758 061
- DE-A1-102008 029 908
- GB-A- 2 139 083

## Beschreibung

Die Erfindung betrifft ein Verfahren zum Betrieb eines programmgesteuerten Haushaltgerätes, insbesondere eines Geschirrspülautomatens, bei dem dem Haushaltgerät Spülflüssigkeit entnommen, einem Zwischenspeicher zugeführt und dort bevorratet wird, und bei dem die Spülflüssigkeit dem Zwischenspeicher zu einem späteren Zeitpunkt insbesondere zum Zwecke der Wiederverwendung wieder entnommen wird.

Aus dem Stand der Technik sind Haushaltgeräte, insbesondere in der Ausgestaltung als Geschirrspülautomat oder Waschmaschine bekannt geworden, die über einen Zwischenspeicher verfügen, der als Vorratsspeicher für Spülflüssigkeit dient. Sinn und Zweck dieses Zwischenspeichers ist es, dem Haushaltgerät entnommene Spülflüssigkeit zwischenzuspeichern, so dass eine Wiederverwendung zu einem späteren Zeitpunkt möglich ist.

Die dem Haushaltgerät zum Zwecke der Zwischenspeicherung zu entnehmende Spülflüssigkeit ist typischerweise eine solche, die vergleichsweise sauber ist, d. h. die vorzugsweise einem letzten von mehreren aufeinander nachfolgenden Spülschritten entnommen ist. Bei einem Geschirrspülautomaten entstammt die zwischenzuspeichernde Spülflüssigkeit vorzugsweise dem letzten Spülschritt, dem sogenannten Klarspülen.

Die im Zwischenspeicher zwischengespeicherte Spülflüssigkeit kann bei einer nächsten Inbetriebnahme des Haushaltgeräts wieder verwendet werden. Bei einem Geschirrspülautomat wird die zwischengespeicherte Spülflüssigkeit vorzugsweise zu Beginn eines neuen Programmablaufes zurück in den Spülraum des Geschirrspülautomaten eingespeist.

Die Zwischenspeicherung und Wiederverwendung von Spülflüssigkeit hat sich im alltäglichen Praxiseinsatz bewährt und bringt insbesondere den Vorteil mit sich, dass der Spülflüssigkeitsverbrauch insgesamt reduziert werden kann, da im Falle der Wiederverwendung von Spülflüssigkeit die Zuführung von Frischwasser reduziert werden kann.

Obgleich sich ein Verfahren der vorgenannten Art zum Zwecke der Einsparung von Frischwasser im alltäglichen Praxiseinsatz bewährt hat, ist es nicht frei von Nachteilen. So hat es sich insbesondere als nachteilig herausgestellt, dass im Zwischenspeicher zwischengespeicherte Spülflüssigkeit verkeimen kann. Dabei tritt das Problem der Verkeimung insbesondere dann auf, wenn zwischen zwei aufeinander nachfolgenden Programmabläufen eine zu lange Zeitdauer verstreicht, d. h. eine solche Zeitdauer liegt, die die zwischengespeicherte Spülflüssigkeit verkeimen lässt. In der Konsequenz dieser Verkeimung kommt es dann zum Einbringen von mit Keimen und anderen biologischen Substanzen kontaminierter Spülflüssigkeit in den Spülraum des Haushaltgerätes bei der Durchführung eines nachfolgenden Programmablaufes.

Da es unbedingt zu vermeiden gilt, verkeimte oder sonst wie kontaminierte Spülflüssigkeit in den Spülraum des Haushaltgerätes einzubringen, sind aus dem Stand der Technik Verfahren bekannt geworden, die den zusätzlichen Programmschritt der Reinigung des Zwischenspeichers vorsehen. Dabei erfolgt die Reinigung des Zwischenspeichers vorzugsweise bei einer Temperatur von ca. 60°C bis 90°C, um eine Desinfektion und Abtötung etwaiger vorhandener biologischer Substanzen erzielen zu können. Typischerweise erfolgt eine solche Reinigung des Zwischenspeichers in regelmäßigen Abständen, beispielsweise nach Ablauf von 20 Programmabläufen.

Die aus dem Stand der Technik vorbekannte Desinfektion des Zwischenspeichers ist insbesondere unter dem Gesichtspunkt des Energieverbrauches von Nachteil. Zum einen deshalb, weil für die Reinigung Spülflüssigkeit verwendet wird, die dann für die eigentlich angestrebte Wiederverwendung nicht mehr zur Verfügung steht. Zum anderen muss zum Zwecke der Desinfektion die Spülflüssigkeit auf eine Desinfektionstemperatur von wenigstens 65°C angehoben werden, was den Verbrauch zusätzlicher Energie zur Folge hat, und zwar insbesondere auch deshalb, weil die gesamte im Spülraum des Haushaltgeräts befindliche Spülflotte auf diese Desinfektionstemperatur zu erwärmen ist, auch wenn nicht die gesamte Spülflotte sondern nur ein Teil hiervon zum Zwecke der Desinfektion in den Zwischenspeicher eingeleitet wird. Dabei kann im ungünstigsten Fall der durch die Desinfektion bedingte Mehrverbrauch an Spülflüssigkeit und Energie die eigentlich mit dem Einsatz des Zwischenbehälters angestrebte Einsparung aufzehren, so dass in der Gesamtbilanz gegenüber herkömmlichen Haushaltgeräten kein Energie- und/oder Verbrauchsvorteil steht.

Aus der DE 10 2008 029 908 A1 ist es im Übrigen bekannt, zur Hemmung von Keim- und/oder Bakterienwachstum Salzsole in den Zwischenspeicher einzubringen.

Es ist ausgehend vom Vorbeschriebenen die Aufgabe der Erfindung, ein Verfahren der eingangs genannten Art dahingehend weiterzuentwickeln, dass ungewünschte Verkeimungen des Zwischenbehälters unterbunden werden können, und dies bei gleichzeitiger Aufrechterhaltung der mit der Verwendung eines Zwischenspeichers angestrebten Reduzierung des Wasserverbrauchs.

Zur Lösung dieser Aufgabe wird mit der Erfindung vorgeschlagen, dass der Zwischenspeicher vor einer erneuten Befüllung mit Spülflüssigkeit getrocknet wird.

Nach der erfindungsgemäßen Verfahrensdurchführung ist vorgesehen, dem Zwischenspeicher zwecks Bevorratung Spülflüssigkeit zuzuführen. Zu einem späteren Zeitpunkt wird dann die im Zwischenspeicher gespeicherte Spülflüssigkeit insbesondere zum Zwecke der Wiederverwendung dem Zwischenspeicher wieder entnommen. Vor einer erneuten Befüllung des Zwischenspeichers mit einer zwischen zu speichernden Spülflüssigkeit erfolgt im Unterschied zum Stand der Technik eine Trocknung des Zwischenspeichers. Als Ergebnis dieser Trocknung wird dem Zwischenspeicher sämtliche Flüssigkeit entzogen, d. h. nach Abschluss der Trocknung befindet sich im Zwischenspeicher keinerlei Spülflüssigkeit mehr, auch keine Restflüssigkeit. Auf diese Weise wird den sich ansonsten ausbildenden biologischen Substanzen, Keimen oder dergleichen die Lebensgrundlage vollständig entzogen, was in vorteilhafter Weise dazu führt, dass die Ausbildung entsprechender biologischer Substanzen, Keime und/oder dergleichen vollständig unterbunden ist. Im Zwischenspeicher unter Umständen in Folge vorangegangener Verwendungen befindliche biologische Substanzen, Keime und/oder dergleichen werden durch die Trockenlegung des Zwischenspeichers im Übrigen abgetötet, so dass eine vollständige Entfernung von unter Umständen vorhandenen biologischen Substanzen, Keimen und/oder dergleichen erfolgt, und dies bei gleichzeitiger Vermeidung einer Wiederverkeimung. Dabei erfolgt die Abtötung von biologischen Substanzen, Keimen und/oder dergleichen allein durch eine Trocknung des Zwischenbehälters. Im Unterschied zum Stand der Technik bedingt diese Maßnahme keinen zusätzlichen Wassereinsatz und keinen zusätzlichen Energieeinsatz. Auch insofern ist die erfindungsgemäße Verfahrensdurchführung gegenüber dem Stand der Technik vorteilhaft.

Insgesamt werden mit der erfindungsgemäßen Verfahrensdurchführung folgende Vorteile erreicht. Sich unter Umständen aufbauende Bio-Filme, Keime, biologische Substanzen und/oder dergleichen werden frühzeitig ausgetrocknet und sind daher biologisch weniger oder nicht mehr wirksam. Durch die Trocknung des Zwischenspeichers wird diesem Wasser als Nährboden für biologische Substanzen, insbesondere Keime und Bakterien entzogen, so dass die Lebensgrundlage für Keime und Bakterien entfällt. Das Wiederverkeimen des Zwischenspeichers wird in Folge der Austrocknung stark reduziert, wenn nicht sogar vollständig vermieden. Dies hat in vorteilhafter Weise auch zur Folge, dass die Bildung von unangenehmen Gerüchen reduziert, wenn nicht sogar gleichfalls vollständig vermieden werden kann.

Gemäß einem weiteren Merkmal der Erfindung ist vorgesehen, dass der Zwischenspeicher zum Zwecke der Trocknung mit einem Luftstrom beaufschlagt wird. Dabei hat die Verwendung eines Luftstroms den Vorteil, dass eine beschleunigte Trocknung des Zwischenspeichers erreicht wird. Um die Trocknungszeit möglichst kurz zu halten, kann gemäß einem weiteren Merkmal der Erfindung vorgesehen sein, dass der Zwischenspeicher von dem Luftstrom durchströmt wird. Zu diesem Zweck ist vorgesehen, dass der Zwischenspeicher eine Lufteintrittsöffnung einerseits und eine Luftaustrittsöffnung andererseits aufweist. Im Zuge der erfindungsgemäßen Verfahrensdurchführung wird der zur Trocknung in den Zwischenspeicher einzuführende Luftstrom über den Luftstromeingang in den Zwischenspeicher geführt. Er durchströmt alsdann den Zwischenspeicher, nimmt dabei die im Zwischenspeicher befindliche Restflüssigkeit auf und verlässt den Zwischenspeicher über den Luftstromausgang wieder.

Um eine noch weitere Verkürzung der Trocknungsdauer zu erreichen, kann der Luftstrom gemäß einem weiteren Merkmal der Erfindung erwärmt werden. Um für die Erwärmung des Luftstromes keine zusätzliche Energie einsetzen zu müssen, ist bevorzugterweise vorgesehen, den in den Zwischenspeicher einzuführenden Luftstrom zum Zwecke der Erwärmung vor einer Einführung in den Zwischenspeicher an einer Begrenzungswand des Spülraumes des Haushaltgerätes vorbeizuführen, und zwar nach Abschluss eines Programmschrittes, demgemäß die Spülflotte programmgemäß in erwärmtem Zustand verwendet wird. In diesem Fall ist nämlich die entsprechende Seitenwand des Spülraums des Haushaltgerätes durch die zuvor aufgewärmte Spülflotte gleichzeitig erwärmt, welche Wärme an einen außenseitig des Spülraums an der Spülraumwand vorbeigeführten Luftstrom abgegeben wird. Es kommt infolgedessen zu einer Erwärmung des Luftstroms bevor er dann in den Zwischenbehälter zwecks Austrocknung desselben eingeführt wird.

Vorrichtungsseitig kann zu diesem Zweck vorgesehen sein, dass der Zwischenspeicher in Form eines Vorratsbehälters unter Belassung eines Spalts benachbart zum Spülraum des Haushaltgerätes ausgebildet ist. Bevor der Luftstrom in den Zwischenspeicher eingeführt wird, durchströmt er den Spaltraum zwischen Spülraum und Zwischenspeicher, infolgedessen es in der vorbeschriebenen Weise zur Wärmeübertragung von der aufgeheizten Spülraumwand auf den durch den Spaltraum hindurchgeführten Luftstrom kommt.

Gemäß einem weiteren Merkmal der Erfindung ist vorgesehen, dass sich an eine Trocknung des Zwischenspeichers eine vorgebbare Anzahl an Wiederauffüllungen und Entleerungen anschließt bevor eine erneute Trocknung vorgenommen wird. Gemäß dieser Verfahrensalternative ist vorgesehen, dass eine Trocknung des Zwischenbehälters nicht nach jeder Entleerung des Zwischenbehälters stattfindet. Es ist vielmehr vorgesehen, mehrere Wiederauffüllungen und Entleerungen ohne Trocknung des Zwischenspeichers vorzusehen. Eine solche Trocknung findet vielmehr erst nach einer Mehrzahl von Wiederauffüllungen und Entleerungen statt, beispielsweise nach 10, 15 oder 20 Wiederauffüllungen und Entleerungen. Auf eine Trocknung des Zwischenspeichers nach jeder Entleerung kann gegebenenfalls deshalb verzichtet werden, weil die Ausbildung von biologischen Substanzen, insbesondere Keimen und Bakterien Wachstumszeit in Anspruch nimmt. Findet pro vorgebbarer Zeiteinheit wiederholte Wiederauffüllungen und Entleerungen statt, so ist dies mit Bezug auf die Ausbildung von biologischen Substanzen, insbesondere Keimen und Bakterien unbedenklich, und zwar einfach deshalb, weil innerhalb der vorgebbaren Zeitspanne die zur Ausbildung von biologischen Substanzen zur Verfügung stehende Wachstumszeit zu kurz ist. In diesem Zusammenhang wird ferner vorgeschlagen, dass nach Ablauf einer vorgebbaren Zeitdauer der Bevorratung der Zwischenspeicher automatisch entleert und getrocknet wird. Gemäß dieser Maßnahme wird ein mit Spülflüssigkeit befüllter Zwischenspeicher automatisch dann entleert und getrocknet, wenn eine vorgebbare Zeitdauer abgelaufen ist, beispielsweise eine Zeitdauer von 12 Stunden, 18 Stunden oder 24 Stunden. Dabei dient der automatische Entleerungs- und -trocknungsschritt dazu, bei einer weniger frequentierten Verwendung des Haushaltgerätes der Ausbildung von biologischen Substanzen, insbesondere Keimen und Bakterien vorbeugen zu können.

Mit der Erfindung wird des Weiteren ein programmgesteuertes Haushaltgerät zur Durchführung des vorbeschriebenen Verfahrens vorgeschlagen, welches über einen Zwischenspeicher zur Bevorratung von insbesondere wieder zu verwendender Spülflüssigkeit verfügt sowie eine Trocknungseinrichtung für den Zwischenspeicher aufweist.

Die Trocknungseinrichtung dient in der schon vorbeschriebenen Weise dazu, eine Trocknung des Zwischenspeichers zu ermöglichen, d. h. nach einer Entleerung desselben im Zwischenspeicher noch befindliche Restfeuchtigkeit vollends zu entfernen, d. h. den Zwischenspeicher auszutrocknen.

Die Trocknungseinrichtung verfügt vorzugsweise über ein Gebläse. Dieses Gebläse dient dazu, einen Luftstrom zu erzeugen, der zum Zwecke der Trocknung des Zwischenspeichers durch diesen hindurchgeführt wird. Die Trocknungseinrichtung kann ferner über ein Heizelement verfügen, das dazu dient, den in den Zwischenspeicher zum Zwecke der Trocknung einzuführenden Luftstrom vorzuwärmen. Eine beschleunigte Trocknung des Zwischenspeichers kann hierdurch erreicht werden.

Bei dem Heizelement der Trocknungseinrichtung kann es sich um ein separates Bauteil handeln. Gemäß einer bevorzugten Ausgestaltung der Erfindung kommt als Heizelement jedoch eine den Spülraum des Haushaltgerätes begrenzende Seitenwand zum Einsatz. Diese kann als Heizelement insofern genutzt werden, als dass es bei Durchführung eines entsprechenden Programmschrittes zur Verwendung einer aufgeheizten Spülflotte im Spülraum des Haushaltgerätes kommt, infolgedessen eine Erwärmung der den Spülraum begrenzenden Seitenwände stattfindet. Bei Vorbeiführen des Luftstroms an den aufgeheizten Begrenzungswänden des Spülraums findet ein Wärmeübergang auf den Luftstrom statt, infolgedessen es zur Erwärmung desselben kommt.

Hinsichtlich des Gebläses der Trocknungseinrichtung wird gemäß einem weiteren Merkmal der Erfindung vorgeschlagen, dass das ohnehin im Haushaltgerät vorhandene Gebläse zum Einsatz kommt. Alternativ ist natürlich der Einsatz eines separat ausgebildeten Gebläses möglich, doch die Verwendung eines ohnehin im Haushaltgerät vorhandenen Gebläses hat den Vorteil, dass zusätzliche Baukomponenten nicht vorgesehen werden müssen.

Der Zwischenspeicher ist bevorzugterweise nach Art eines Behälters ausgebildet, besteht aus Kunststoff und ist unter Belassung eines Spaltraumes einer Seitenwand des Spülraumes des Haushaltgerätes nebengeordnet. Das Fassungsvolumen des Zwischenspeichers kann mit 1 l bis 3 l, vorzugsweise mit 2 I bemessen sein.

Zum Zwecke der Hindurchführung eines Luftstroms durch den als Behälter ausgebildeten Zwischenspeicher kann dieser über einen Luftstromeinlass und einen Luftstromauslass verfügen, die vorzugsweise strömungstechnisch gegenüberliegend ausgebildet sind.

Weitere Merkmale und Vorteile der Erfindung ergeben sich aus der nachfolgenden Beschreibung anhand der Figuren. Dabei zeigen:
- Fig. 1: in schematischer Seitenansicht ein in erfindungsweiser Weise ausgebildetes Haushaltgerät,
- Fig. 2: das Haushaltgerät nach Fig. 1 gemäß Blickrichtung II nach Fig. 1 und
- Fig. 3: in schematischer Darstellung die erfindungsgemäße Funktionsweise.

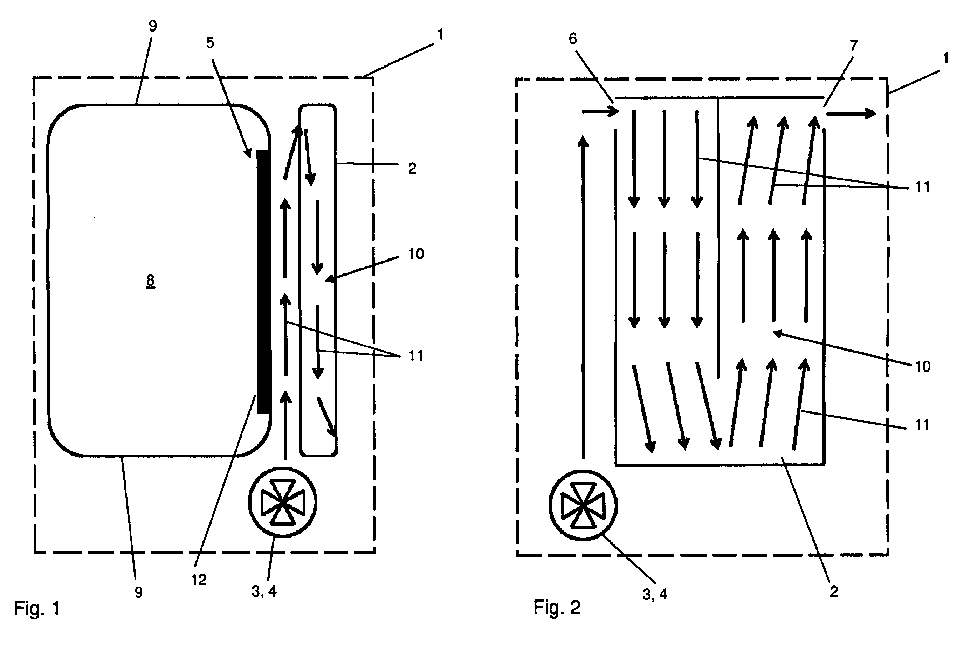

Fig. 1 lässt in rein schematischer Darstellung ein Haushaltgerät 1 erkennen, und zwar in der beispielhaften Ausgestaltung als Geschirrspülautomat.

Das Haushaltgerät 1 verfügt über einen durch Spülraumwände 9 begrenzten Spülraum 8. In an sich bekannter Weise dient dieser Spülraum 8 der Aufnahme von zu reinigendem Geschirr. Über eine nicht näher dargestellte Beschickungsöffnung ist der Spülraum 8 benutzerseitig zugänglich.

Innerhalb des Spülraumes 8 ist eine Heizeinrichtung 12 untergebracht, die dazu dient, in den Spülraum 8 eingebrachte Spülflüssigkeit erwärmen zu können. Eine solche Erwärmung findet beispielsweise bei der Durchführung einer Klarspülung statt, die typischerweise bei einer Temperatur von ca. 60°C durchgeführt wird.

Das Haushaltgerät 1 verfügt ferner über einen Zwischenspeicher 2, der im dargestellten Ausführungsbeispiel als Behälter aus Kunststoff ausgebildet ist. Der Zwischenspeicher 2 ist unter Belassung eines Spaltraums dem Spülraum 8 nebengeordnet.

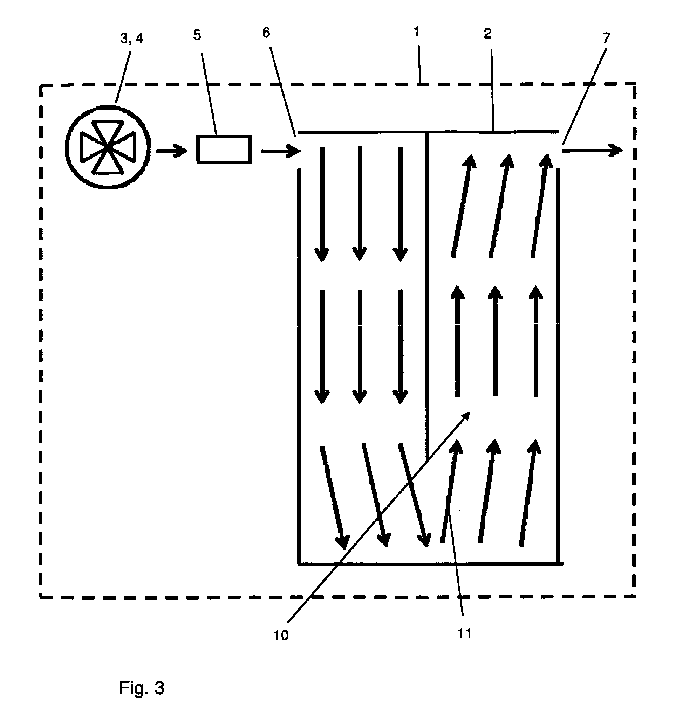

Es ist des Weiteren eine ein Gebläse 4 und ein Heizelement 5 aufweisende Trocknungseinrichtung 3 vorgesehen. Diese dient der Trocknung des Zwischenspeichers 2, d. h. der Entfernung jeglicher Restfeuchtigkeit, die sich nach einer Entleerung gegebenenfalls noch im Zwischenspeicher 2 befinden kann. Als Heizelement 5 kann ein separates Heizelement 5 zum Einsatz kommen, wie dies in Fig. 3 gezeigt ist. Alternativ kann als Heizelement 5 auch eine Spülraumwand 9 des Spülraums 8 genutzt werden, vorzugsweise die Spülraumwand 9, die innenseitig die schon vorgenannte Heizeinrichtung 12 trägt.

Die Funktionsweise der erfindungsgemäßen Verfahrensdurchführung ergibt sich wie folgt:
Im Zuge eines programmgesteuerten Betriebs des Haushaltgeräts 1 wird diesem, vorzugsweise dem Spülraum 8 Spülflüssigkeit entnommen, welche dem Zwischenspeicher 2 zugeführt wird, wo eine Bevorratung der Spülflüssigkeit stattfindet. Zu einem späteren Zeitpunkt wird diese im Zwischenspeicher 2 gespeicherte Spülflüssigkeit wieder verwendet, indem sie dem Zwischenspeicher 2 entnommen und dem Spülraum 8 zugeführt wird. Bevor dann eine erneute Befüllung des Zwischenspeichers 2 stattfindet, wird dieser getrocknet, zu welchem Zweck die Trocknungseinrichtung 3 zum Einsatz kommt.

Wie einer Zusammenschau der Figuren 1 bis 3 zu entnehmen ist, wird ein vom Gebläse 4 der Trocknungseinrichtung 3 erzeugter Luftstrom 10, der in den Figuren 1 bis 3 durch die Pfeile 11 symbolisiert ist, durch den zwischen Zwischenspeicher 2 und Spülraum 8 ausgebildeten Spaltraum geführt, wo gegebenenfalls eine Erwärmung des Luftstromes 10 an einer aufgewärmten Spülraumwand 9 erfolgt. Der Luftstrom 10 wird sodann über einen Luftstromeinlass 6 in den Zwischenbehälter 2 eingeführt. Er durchströmt sodann den Zwischenspeicher 2 und verlässt diesen wieder über den Lufstromauslass 7. Infolge dieses Hindurchströmens des Luftstroms 10 durch den Zwischenspeicher 2 erfolgt eine Mitnahme der im Zwischenspeicher 2 gegebenenfalls vorhandenen Restfeuchte, wodurch eine Trocknung des Zwischenspeichers 2 erreicht wird. In der Konsequenz wird die im Zwischenspeicher 2 vorhandene Restfeuchte vollständig entfernt und biologischen Substanzen, wie beispielsweise Keimen, Bakterien oder dergleichen wird auf diese Weise die Lebensgrundlage vollständig entzogen.

Die im Zwischenspeicher 2 zwischengespeicherte Spülflüssigkeit wird vorzugsweise nach einigen Tagen der Speicherung, gegebenenfalls sogar nach nur zwei Tagen der Zwischenspeicherung automatisch verworfen, d. h. abgepumpt. Diese automatische Entleerung des Zwischenspeichers 2 erfolgt deshalb, weil eine Wiederverwendung der zwischengespeicherten Spülflüssigkeit aufgrund der bis dahin eingetretenen Verkeimung ohnehin nicht mehr bedenkenlos erfolgen kann. Direkt nach dem Abpumpen der Spülflüssigkeit wird das Gebläse 4 eingeschaltet. Dabei ist der Zwischenspeicher 2 so ausgestaltet, dass der Gebläseluftstrom zwischen Spülraumwand 9 und Zwischenspeicher 2 hindurchströmt und alsdann in den Zwischenspeicher 2 geleitet wird, wie dies insbesondere Fig. 1 erkennen lässt.

Der Zwischenspeicher 2 verfügt über eine weitere Öffnung für den Luftstrom in Form des Luftstromauslasses 7, so dass der Luftstrom 10 kontinuierlich durch den Zwischenspeicher 2 geleitet werden kann, wie dies insbesondere die Darstellung nach Fig. 2 veranschaulicht. Dabei kann der gesamte Luftstrom 10 oder auch nur ein Teilluftstrom eines Trocknungsgebläses verwendet werden, das ohnehin Bestandteil des Haushaltgerätes 1 ist und eigentlich zur Trocknung des im Spülraum 8 vorhandenen Geschirrs dient. Mittels des Luftstroms 10 trocknet die restliche, im Zwischenspeicher 2 vorhandene Feuchtigkeit. Dadurch bedingt können sich anfänglich bildende oder sich bereits gebildete biologische Substanzen, wie z. B. Bio-Filme, Bakterien, Keime und/oder dergleichen ausgetrocknet werden, infolgedessen eine Abtötung dieser Substanzen erfolgt. Durch die Trocknung des Zwischenspeichers 2 wird diesen Substanzen im Übrigen die Lebensgrundlage entzogen, infolgedessen sie absterben.

Bei dem Gebläse 4 handelt es sich vorzugsweise um das im Haushaltgerät 1 ohnehin vorhandene Trocknungsgebläse zur Trocknung des Geschirrs. Dabei kann der Luftstrom 10 durch einen Schwimmer im Zwischenspeicher 2 mittels einer entsprechenden Mechanik ohne zusätzlichen Aktor zwischen Geschirrtrocknung und Zwischenspeicher 2 umgelenkt werden. Ist der Zwischenspeicher 2 leer, erfolgt eine Trocknung desselben. Ist er hingegen mit Spülflüssigkeit gefüllt, erfolgt mittels des Gebläses 4 eine Trocknung des im Spülraum 8 befindlichen Geschirrs.

## Patentansprüche

1. Verfahren zum Betrieb eines programmgesteuerten Haushaltgerätes (1), insbesondere eines Geschirrspülautomatens, bei dem dem Haushaltgerät (1) Spülflüssigkeit entnommen, einem Zwischenspeicher (2) zugeführt und dort bevorratet wird, und bei dem die Spülflüssigkeit dem Zwischenspeicher (2) zu einem späteren Zeitpunkt insbesondere zum Zwecke der Wiederverwendung wieder entnommen wird,
**dadurch gekennzeichnet,**
**dass** der Zwischenspeicher (2) vor einer erneuten Befüllung mit Spülflüssigkeit getrocknet wird.

2. Verfahren nach Anspruch 1,
**dadurch gekennzeichnet,**
**dass** der Zwischenspeicher (2) zum Zwecke der Trocknung mit einem Luftstrom (10) beaufschlagt wird.

3. Verfahren nach Anspruch 2,
**dadurch gekennzeichnet,**
**dass** der Zwischenspeicher (2) vom Luftstrom (10) durchströmt wird.

4. Verfahren nach Anspruch 2 oder 3,
**dadurch gekennzeichnet,**
**dass** der Luftstrom (10) erwärmt wird.

5. Verfahren nach einem der vorhergehenden Ansprüche,
**dadurch gekennzeichnet,**
**dass** sich an eine Trocknung des Zwischenspeichers (2) eine vorgebbare Anzahl an Wiederauffüllungen und Entleerungen anschließt bevor eine erneute Trocknung vorgenommen wird.

6. Verfahren nach einem der vorhergehenden Ansprüche,
**dadurch gekennzeichnet,**
**dass** nach Ablauf einer vorgebbaren Zeitdauer der Bevorratung der Zwischenspeicher (2) automatisch entleert und getrocknet wird.

7. Programmgesteuertes Haushaltgerät (1), insbesondere Geschirrspülautomat, mit einem Zwischenspeicher (2) zur Bevorratung von insbesondere wieder zu verwendender Spülflüssigkeit, **gekennzeichnet durch** eine Trocknungseinrichtung (3) für den Zwischenspeicher (2).

8. Haushaltgerät nach Anspruch 7,
**dadurch gekennzeichnet,**
**dass** die Trocknungseinrichtung (3) ein Gebläse (4) aufweist.

9. Haushaltgerät nach Anspruch 7 oder 8,
**dadurch gekennzeichnet,**
**dass** die Trocknungseinrichtung (3) ein Heizelement (5) aufweist.

10. Haushaltgerät nach einem der vorhergehenden Ansprüche 7 bis 9,
**dadurch gekennzeichnet,**
**dass** der Zwischenspeicher (2) einen Luftstromeinlass (6) und einen Luftstromauslass (7) aufweist.

11. Haushaltgerät nach einem der vorhergehenden Ansprüche 7 bis 10,
**dadurch gekennzeichnet,**
**dass** der Zwischenspeicher (2) ein Behälter mit einem Fassungsvolumen von 1 l bis 3 l, vorzugsweise von 2 l ist.

## Claims

1. Method for operating a program-controlled domestic appliance (1), in particular an automatic dishwasher, in which rinsing fluid is taken from the domestic appliance (1), fed to a reservoir (2) and stored therein, and in which, at a subsequent point in time, the rinsing fluid is removed again from the reservoir (2) for the purposes of being reused,
**characterised in that**
the reservoir (2) is dried before being refilled with rinsing fluid.

2. Method according to claim 1,
**characterised in that**
the reservoir (2) is supplied with an air flow (10) for the purposes of drying.

3. Method according to claim 2,
**characterised in that**
the air flow (10) flows through the reservoir (2).

4. Method according to either claim 2 or claim 3,
**characterised in that**
the air flow (10) is heated.

5. Method according to any of the preceding claims,
**characterised in that**
a predetermined number of refilling- and emptying processes follow a drying process of the reservoir (2) before another drying process is carried out.

6. Method according to any of the preceding claims,
**characterised in that**,
after a predetermined duration of the storage has elapsed, the reservoir (2) is automatically emptied and dried.

7. Program-controlled domestic appliance (1), in particular an automatic dishwasher, having a reservoir (2) for storing in particular rinsing fluid that is to be reused, **characterised by** a drying device (3) for the reservoir (2).

8. Domestic appliance according to claim 7,
**characterised in that**
the drying device (3) comprises a fan (4).

9. Domestic appliance according to either claim 7 or claim 8,
**characterised in that**
the drying device (3) comprises a heating element (5).

10. Domestic appliance according to any of the preceding claims 7 to 9,
**characterised in that**
the reservoir (2) comprises an air flow inlet (6) and an air flow outlet (7).

11. Domestic appliance according to any of the preceding claims 7 to 10,
**characterised in that**
the reservoir (2) is a container having a capacity of from 1 l to 3 I, preferably of 2 l.

## Revendications

1. Procédé de fonctionnement d'un appareil électroménager (1) commandé par programme, en particulier d'un appareil automatique à laver la vaisselle, dans lequel du liquide de lavage est prélevé de l'appareil électroménager (1), conduit à un réservoir intermédiaire (2) et y est stocké, et dans lequel le liquide de lavage est de nouveau prélevé du réservoir intermédiaire (2) à un moment ultérieur en particulier pour être réutilisé,
**caractérisé en ce que**
le réservoir intermédiaire (2) est séché avant un nouveau remplissage avec du liquide de lavage.

2. Procédé selon la revendication 1,
**caractérisé en ce que**
le réservoir intermédiaire (2) est exposé à un flux d'air (10) en vue du séchage.

3. Procédé selon la revendication 2,
**caractérisé en ce que**
le réservoir intermédiaire (2) est traversé par le flux d'air (10).

4. Procédé selon la revendication 2 ou 3,
**caractérisé en ce que**
le flux d'air (10) est chauffé.

5. Procédé selon l'une des revendications précédentes,
**caractérisé en ce**
**qu'**un séchage du réservoir intermédiaire (2) est suivi d'un nombre pouvant être prédéfini de nouveaux remplissages et de vidages avant qu'un nouveau séchage soit entrepris.

6. Procédé selon l'une des revendications précédentes,
**caractérisé en ce que**,
après l'expiration d'une durée de stockage pouvant être prédéfinie, le réservoir intermédiaire (2) est vidé et séché automatiquement.

7. Appareil électroménager (1) commandé par programme, en particulier appareil automatique à laver la vaisselle, avec un réservoir intermédiaire (2) pour le stockage de liquide de lavage, en particulier à réutiliser, **caractérisé par** un dispositif de séchage (3) pour le réservoir intermédiaire (2).

8. Appareil électroménager selon la revendication 7,
**caractérisé en ce que**
le dispositif de séchage (3) présente un ventilateur (4).

9. Appareil électroménager selon la revendication 7 ou 8,
**caractérisé en ce que**
le dispositif de séchage (3) présente un élément de chauffage (5).

10. Appareil électroménager selon l'une des revendications précédentes 7 à 9,
**caractérisé en ce que**
le réservoir intermédiaire (2) présente une entrée (6) de flux d'air et une sortie (7) de flux d'air.

11. Appareil électroménager selon l'une des revendications précédentes 7 à 10,
**caractérisé en ce que**
le réservoir intermédiaire (2) est un récipient d'une capacité de 1 l à 3 l, de préférence de 2 l.
